# EUROPÄISCHE PATENTSCHRIFT

(11) **EP 0 748 949 B1**
(45) Veröffentlichungstag und Bekanntmachung des Hinweises auf die Patenterteilung: **22.09.1999**
(21) Anmeldenummer: 96104037.5
(22) Anmeldetag: 14.03.1996
(51) Int. Cl.: F16F 1/387

(54) **Radiallager**
Radial support
Support radial

(30) Priorität: 16.06.1995 DE 19521967
(43) Veröffentlichungstag der Anmeldung: 18.12.1996
(73) Patentinhaber: Metzeler Gimetall AG, 64747 Breuberg (DE)
(72) Erfinder: Hofmann, Manfred, 65597 Hünfelden (DE); Brauer, Kai, 56242 Selters (DE); Gentner, Thomas, 68753 Waghäusel (DE)
(74) Vertreter: Preissner, Nicolaus, Dipl.-Ing.

(56) Entgegenhaltungen:
- EP-A- 0 412 863
- DE-A- 4 025 284
- DE-A- 4 026 370
- GB-A- 1 570 751
- GB-A- 2 211 271
- PATENT ABSTRACTS OF JAPAN vol. 010, no. 159 (M-486), 7.Juni 1986 & JP-A-61 012414 (NISSAN JIDOSHA KK;OTHERS: 01), 20.Januar 1986,

## Beschreibung

Die Erfindung betrifft ein Radiallager, insbesondere für eine Drehmomentstütze bei Kraftfahrzeugmotoren, mit einer Außenhülse und einer zur Außenhülse koaxialen als Buchsenkern ausgebildeten Innenhülse, wobei in einem zwischen Innenhülse und Außenhülse vorliegenden Freiraum mindestens ein radial ausgerichteter Elastomerkörper mit axial ausgerichteten Hohlkanälen und mindestens ein Gummiendanschlag angeordnet sind, der nach einer vorbestimmbaren Einfederung des Elastomerkörpers wirkt.

Ein derartiges Radiallager ist aus der deutschen Patentschrift 40 25 284 der Anmelderin bekannt. Bei dem bekannten Radiallager ist eine zylindrische Außenhülse und eine koaxiale Innenhülse vorgesehen, wobei in dem Ringspalt zwischen Außen- und Innenhülse zwei beabstandete Elastomerkörper angeordnet sind. Die Elastomerkörper weisen jeweils in Axialrichtung verlaufende Hohlkanäle auf. Zwischen den beiden Elastomerkörpern ist ein ringförmiger Gummiendanschlag auf der Innenhülse aufgebracht. Bei einer radialen Belastung des Radiallagers werden zunächst die beiden Elastomerkörper zusammengepreßt. Hierbei ist durch die Anordnung und Ausbildung der in den Elastomerkörpern vorgesehenen Hohlkanälen eine Variation der Steifigkeit sowohl in Radialrichtung als auch Axialrichtung möglich.

Bei Torque-Roll-Motorlagerungsystemen wird das Gewicht des Motors in der sogenannten Torque-Roll-Achse von zwei Lagern aufgenommen. Die auftretenden Drehmomente führen zu Rollbewegungen des Motors, die durch sogenannte Drehmomentstützen aufgefangen werden. Derartige Lager sollten für kleine Erregungen, wie sie beispielsweise im Leerlauf auftreten, sehr weich sein. Zur Abstützung des auftretenden Drehmomentes müssen diese Lager jedoch auch sehr hohe Kräfte aufnehmen können.

Demgemäß liegt der vorliegenden Erfindung die Aufgabe zugrunde, ein Radiallager vorzuschlagen, mit dem mindestens drei lineare Kennlinienbereiche unterschiedlicher Steifigkeiten erzeugbar sind.

Zur Lösung dieser Aufgabe ist bei einem Radiallager der eingangs genannten Art vorgesehen, daß die Innenhülse an ihrem Außenumfang mittels mindestens zwei sich gegenüberliegenden elastischen Tragkörpern an der Außenhülse derart aufgenommen ist, daß mit zunehmender Kraft hintereinanderfolgend die elastischen Tragkörper, der mindestens eine Elastomerkörper und der mindestens eine Gummiendanschlag, die jeweils unterschiedliche Steifigkeit aufweisen, wirken.

Bei dem erfindungsgemäßen Radiallager bewirken die am Außenumfang der Innenhülse angebrachten elastischen Tragkörper einen Anfangsbereich der Kennlinie mit niedriger Steifigkeit. Hierbei können die Tragkörper bei der Montage vorgespannt werden, so daß die auftretende Schubsteifigkeit nochmals reduziert werden kann. Durch diese Vorspannung kann die Lebensdauer des Bauteils erheblich verbessert werden. Bei einer größeren Krafteinleitung ist dann die Federsteifigkeit des mindestens einen Elastomerkörpers auschlaggebend. Diese weist eine höhere Steifigkeit als der Anfangsbereich der Kennlinie auf, wobei die Steifigkeit durch die in dem mindestens einen Elastomerkörper eingebrachten in Axialrichtung verlaufenden Hohlkanälen variiert werden kann. Hierbei können auch im Querschnitt veränderliche Hohlkanäle vorliegen. Schließlich kommt bei weiter ansteigender Kraft der Gummiendanschlag in Kontakt mit der Außenhülse, wobei dann die Steifigkeit des Gummiendanschlags für die Kennlinie ausschlaggebend ist. Ein wesentlicher Vorteil des erfindunggemäßen Radiallagers liegt darin, daß bei prinzipiell gleichen Aufbau große Variationsmöglichkeiten bestehen, wodurch sich ein breites Einsatzfeld erschließt.

Vorteilhafte Ausgestaltungen der Erfindung sind in den Unteransprüchen aufgeführt.

Vorteilhaft sind zwei beabstandete Elastomerkörper vorgesehen, wobei zwischen den Elastomerkörpern der Gummiendanschlag angeordnet ist.

In Ausgestaltung der Erfindung kann der mindestens eine Elastomerkörper gegenüberliegende Bereiche aufweisen, zwischen denen die Innenhülse aufgenommen ist.

Der mindestens eine Elastomerkörper und/oder dessen Bereiche können in Umfangsrichtung versetzt zu den Tragkörpern angeordnet sein und somit mit dem Tragkörper einen Winkel, insbesondere einen 90 °-Winkel, einschließen.

Vorteilhaft ist der mindestens eine Elastomerkörper an der Innenhülse festgelegt, wobei der Außenumfang des mindestens einen Elastomerkörpers mit der Außenhülse einen Spalt (S₁) begrenzt. Somit kommt der Elastomerkörper erst nach Überwindung des Spalts zur Wirkung.

Vorteilhaft ist der Gummiendanschlag an einem Metallwulst vorgesehen, der von der Innenhülse radial abragt. Auf den Metallwulst ist dann beispielsweise durch Vulkanisation eine elastische Gummischicht aufgebracht.

Vorteilhaft begrenzt der Gummiendanschlag mit der Außenhülse einen Spalt (S₂), der größer als der Spalt (S₁) zwischen Elastomerkörper und Außenhülse ist. Somit wirkt der Gummiendanschlag erst nach Überwindung des Spalts S₂.

Vorteilhaft können die Hohlkanäle des mindestens eines Elastomerkörpers in Axialrichtung veränderlichen Querschnitt aufweisen. Beispielsweise kann der Elastomerkörper Hohlkanäle gemäß dem deutschen Patent 40 25 284 der Anmelderin aufweisen.

Bei einer weiteren vorteilhaften Ausgestaltung ist ein Innenteil vorgesehen, das die Innenhülse, hieran angeordnete beabstandete Elastomerkörper mit einem zwischenliegenden Gummiendanschlag und auf der Außenseite der Innenhülse aufgebrachte, in Umfangsrichtung versetzt zu den Elastomerkörpern angeordnete Tragkörper umfaßt, die an ihren Außenseiten mit Stirnplatten versehen sind, wobei das Innenteil an der Außenhülse festlegbar ist. Ein derartiges Innenteil wird dann bei der Montage des Radiallagers in die Außenhülse eingeführt und an dieser festgelegt, wobei eine Vorspannung der die Innenhülse aufnehmenden Tragkörper erfolgt.

Eine weitere Ausgestaltung der Erfindung betrifft eine Drehmomentstützte, insbesondere für eine Troque-Roll-Motorlagerung bei Kraftfahrzeugen, mit einem Radiallager gemäß einem der vorstehenden Ansprüche. Für diesen Einsatzfall ist es besonders vorteilhaft, daß im Anfangsbereich eine sehr weiche Kennlinie und nur geringe Steifigkeit vorliegt. Trotzdem kann eine derartige Drehmomentstütze auch beim Auftreten von Drehmomenten hohe Kräfte aufnehmen. Insgesamt weist die erfindungsgemäße Drehmomentstütze drei abhängig von der Einfederung vorliegende unterschiedliche Kennlinienbereiche mit ansteigender Federsteifigkeit auf.

Nachfolgend wird die Erfindung anhand eines in der Zeichnung schematisch dargestellten Ausführungsbeispiels näher erläutert. Dabei zeigen:
- Figur 1: eine Seitenansicht auf ein erfindungsgemäßes Radiallager,
- Figur 2: einen Schnitt längs der Linie II-II gemäß Figur 1,
- Figur 3: einen Schnitt längs der Linie III-III in Figur 1,
- Figur 4: einen Axialschnitt durch das Innenteil des Radiallagers gemäß Figur 1,
- Figur 5: einen Schnitt längs der Linie V-V gemäß Figur 4,
- Figur 6: eine Einzeldarstellung des Innenteils des Radiallagers gemäß Figur 1, und
- Figur 7: eine Kraft-Weg-Kennlinie des Radiallagers gemäß Figur 1.

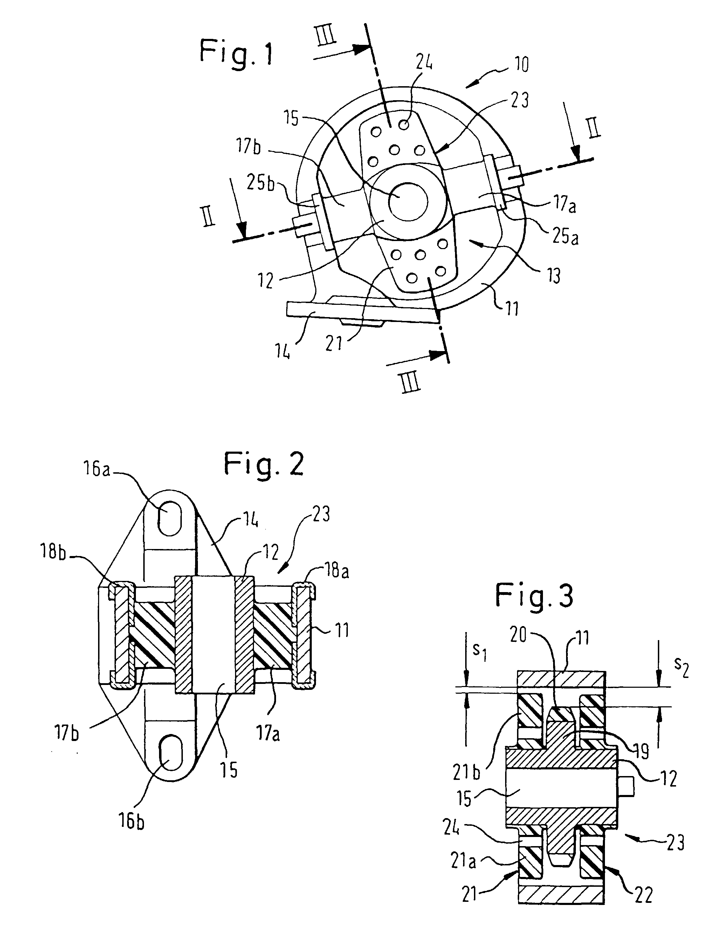

Das in Figur 1 dargestellte Radiallager ist als Drehmomentstütze 10 ausgebildet. Die Drehmomentstütze 10 kommt bei Torque-Roll-Motorlagerungsystemen zum Einsatz, bei denen der Fahrzeugmotor in der sogenannten Torque-Roll-Achse von zwei Lagern aufgenommen ist und die Drehmomente durch Drehmomentstützen aufgefangen werden.

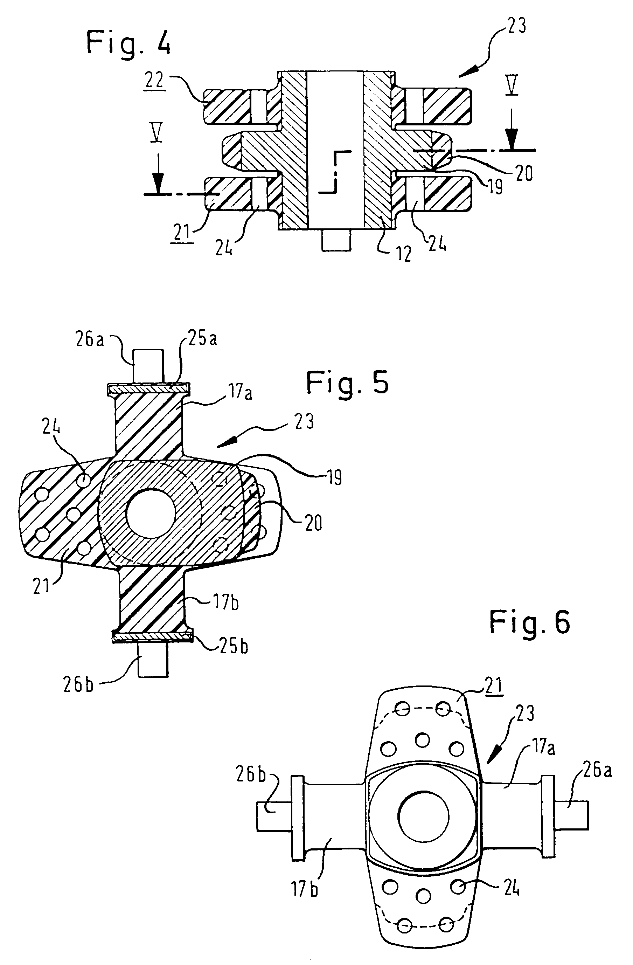

Wie aus den Figuren 1 bis 3 hervorgeht, weist die Drehmomentstütze 10 eine Außenhülse 11 auf, die senkrecht von einem Befestigungsteil 14 abragt. An dem Befestigungsteil 14 sind zwei Befestigungslöcher 16a, 16b zur Festlegung an der nicht dargestellten Fahrzeugkarosserie vorgesehen. Die Außenhülse 11 begrenzt einen Freiraum 13, in dem ein Innenteil 23 aufgenommen wird, das sich aus mehreren Bauteilen aufbaut. In den Figuren 4 bis 6 ist das Innenteil 23 in unterschiedlichen Ansichten gezeigt. Das Innenteil 23 weist eine im eingebauten Zustand koaxial zur Außenhülse 11 angeordnete Innenhülse 12 auf, die mit einer Innenbohrung 15 versehen ist.

Wie aus den Figuren 3 und 4 besonders gut ersichtlich ist, sind am Außenumfang der Innenhülse 12 zwei beabstandete Elastomerkörper 21, 22 aufgenommen. Jeder der Elastomerkörper 21, 22 weist zwei gegenüberliegende Bereiche 21a, 22b auf, so daß die Innenhülse 12 zwischenliegend angeordnet sind. In den Elastomerkörpern 21, 22 sind in Axialrichtung verlaufende Hohlkanäle 24 eingebracht. Mit den Hohlkanälen 24 kann die Steifigkeit der Elastomerkörper 21, 22 variiert werden. Die Hohlkanäle 24 können in Axialrichtung unterschiedlichen Querschnittsverlauf aufweisen.

Zwischen den Elastomerkörpern 21, 22 ist ein Gummiendanschlag 20 vorgesehen, der am Außenumfang eines radial von der Innenhülse 12 abragenden Metallwulstes 19 aufgebracht ist.

Wie aus Figur 3 hervorgeht, begrenzen die Elastomerkörper 21, 22 mit der Außenhülse 11 einen Spalt S₁. Der zwischenliegend angeordnete Gummiendanschlag 20 begrenzt mit der Außenhülse 11 einen Spalt S₂, der wesentlich größer als der Spalt S, ist.

Die Innenhülse 12 ist weiterhin mit zwei Tragkörpern 17a, 17b versehen, die in Umfangsrichtung mit den Elastomerkörpern 21, 22 einen 90 °-Winkel einschließen. Wie aus Figur 5 hervorgeht, die einen Schnitt längs der Linie V-V in Figur 4 zeigt, weisen die elastischen Tragkörper endseitig Stirnplatten 25a, 25b auf. Von den Stirnplatten 25a, 25b ragt jeweils ein Befestigungsbolzen 26a, 26b senkrecht ab, der der Festlegung des Innenteils 23 an der Außenhülse 11 dient.

Auch aus der Ansicht gemäß Figur 6 gehen die wesentlichen das Innenteil 23 bildenden Bauteile hervor.

Bei der Montage der Drehmomentstütze 10 wird das komplett hergestellte Innenteil 23 in die entsprechenden Aufnahmen an der Außenhülse 11 eingeführt. Zur Festlegung des Innenteils 23 sind an den Tragkörpern 17a, 17b Befestigungsklammern 28a, 28b vorgesehen, die formschlüssig um die Außenhülse 11 umgelegt werden. Hierdurch ist es möglich, daß die Drehmomentstütze 10 in einfacher Weise wieder demontiert werden kann. Bei der Montage werden die Tragkörper 17a, 17b vorgespannt, wodurch die Steifigkeit nochmals reduziert werden kann.

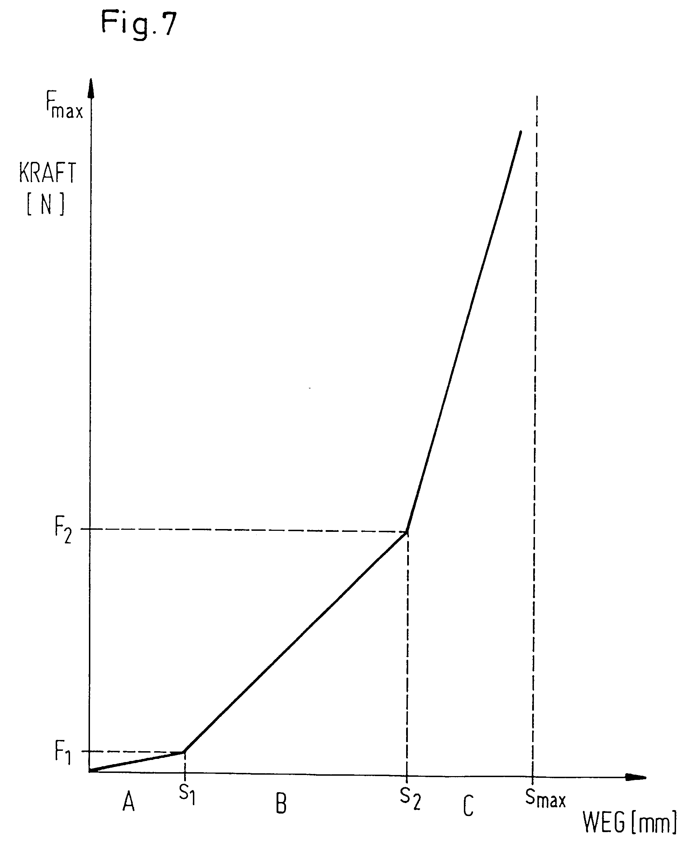

Nachfolgend soll die Funktionsweise der Drehmomentstütze 10 anhand von Figur 7, die die Kraft-Weg-Kennlinie zeigt, näher erläutert werden.

In einem Anfangsbereich A wird die Kraft-Weg-Kennlinie durch die Steifigkeit der Tragkörper 17a, 17b bestimmt. In diesem Anfangsbereich A ist die Drehmomentstütze 10 sehr weich ausgelegt und weist nur eine sehr geringe Steifigkeit auf. Somit können kleine Erregungen, wie sie beispielsweise im Leerlauf auftreten, gut isoliert werden. In diesem Anfangsbereich A sind die Elastomerkörper 21, 22 ohne Wirkung, da der Spalt S₁ noch nicht überwunden ist. Erst bei größeren Kräften ist die Einfederung so groß, daß der Spalt S₁ überwunden wird. In diesem Zwischenbereich B wird die Kraft-Weg-Kennlinie durch die Steifigkeit der Elastomerkörper 21, 22 erhöht. Somit wird die Steifigkeit im Zwischenbereich B durch die Tragkörper 17a, 17b und die Elastomerkörper 21, 22 bestimmt. Wie aus Figur 7 hervorgeht, liegt in diesem Zwischenbereich B eine größere Steifigkeit vor. Die Steifigkeit ist im weiten Umfang durch die in den Elastomerkörpern 21, 22 vorgesehenen Hohlkanäle 24 variierbar. Bei größeren Kräften wird auch der Spalt S₂ überwunden, so daß nunmehr auch die Federsteifigkeit des Gummiendanschlags 20 für die Drehmomentstütze 10 wirksam ist und sich auf die im Zwischenbereich B vorliegende Steifigkeit addiert. Im Endbereich C liegt somit eine hohe Steifigkeit vor, wie aus Figur 7 ersichtlich ist.

Durch die Hintereinanderschaltung der elastischen Tragkörper 17a, 17b, der Elastomerkörper 21, 22 und des Gummiendanschlags 20 wird somit eine Drehmomentstütze 10 geschaffen, die drei verschiedene jeweils linear verlaufende Bereiche A, B und C mit unterschiedlichen Steifigkeiten aufweist. Hierdurch können einerseits die insbesondere im Lerrlauf auftretenden kleinen Erregungen gut isoliert werden, während andererseits auch die mit den eingeleiteten Drehmomenten verbundenen sehr großen Kräfte aufgenommen werden können.

## Patentansprüche

1. Radiallager, insbesondere für eine Drehmomentstütze bei Kraftfahrzeugmotoren, mit einer Außenhülse und einer zur Außenhülse koaxialen als Buchsenkern ausgebildeten Innenhülse, wobei in einem zwischen Innenhülse und Außenhülse vorliegenden Freiraum mindestens ein radial ausgerichteter Elastomerkörper mit axial ausgerichteten Hohlkanälen und mindestens ein Gummiendanschlag angeordnet sind, der nach einer vorbestimmbaren Einfederung des Elastomerkörpers wirkt, dadurch gekennzeichnet, daß die Innenhülse (12) an ihrem Außenumfang mittels mindestens zwei sich gegenüberliegenden elastischen Tragkörpern (17a, 17b) an der Außenhülse (11) derart aufgenommen ist, daß mit zunehmender Kraft hintereinanderfolgend die elastischen Tragkörper, der mindestens eine Elastomerkörper und der mindestens eine Gummiendanschlag, die jeweils unterschiedliche Steifgkeit aufweisen, wirken.

2. Radiallager nach Anspruch 1, dadurch gekennzeichnet, daß zwei beabstandete Elastomerkörper (21, 22) vorgesehen sind, wobei zwischen den Elastomerkörpern (21, 22) der Gummiendanschlag (20) angeordnet ist.

3. Radiallager nach Anspruch 1 oder 2, dadurch gekennzeichnet, daß der mindestens eine Elastomerkörper (21, 22) gegenüberliegende Bereich (21a, 21b) aufweist, zwischen denen die Innenhülse 12 aufgenommen ist.

4. Radiallager nach einem der Ansprüche 1 bis 3, dadurch gekennzeichnet, daß der mindestens eine Elastomerkörper (21, 22) und/oder dessen Bereiche (21a, 21b) in Umfangsrichtung versetzt zu den Tragkörpern (17a, 17b) angeordnet ist und somit mit den Tragkörpern (17a, 17b) einen Winkel, insbesondere einen 90 °-Winkel, einschließt.

5. Radiallager nach einem der Ansprüche 1 bis 4, dadurch gekennzeichnet, daß der mindestens eine Elastomerkörper (21, 22) an der Innenhülse (12) festgelegt ist, wobei der Außenumfang des mindestens einen Elastomerkörpers (21, 22) mit der Außenhülse (11) einen Spalt (S₁) begrenzt.

6. Radiallager nach einem der Ansprüche 1 bis 5, dadurch gekennzeichnet, daß der Gummiendanschlag (20) an einem Metallwulst (19) vorgesehen ist, der von der Innenhülse (12) radial abragt.

7. Radiallager nach einem der Ansprüche 1 bis 6, dadurch gekennzeichnet, daß der Gummiendanschlag (20) mit der Außenhülse einen Spalt (S₂) begrenzt, der größer als der Spalt (S₁) zwischen Elastomerkörper (21, 22) und Außenhülse (11) ist.

8. Radiallager nach einem der Ansprüche 1 bis 7, dadurch gekennzeichnet, daß die Hohlkanäle (24) des mindestens einen Elastomerkörpers (21, 22) in Axialrichtung veränderlichen Querschnitt aufweisen.

9. Radiallager nach einem der Ansprüche 1 bis 8, dadurch gekennzeichnet, daß ein Innenteil (23) vorgesehen ist, das die Innenhülse (12) hieran angeordnete, beabstandete Elastomerkörper (21, 22) mit einem zwischenliegenden Gummiendanschlag (20) und auf der Außenseite der Innenhülse (12) aufgebrachte, in Umfangsrichtung versetzt zu den Elastomerkörpern (21, 22) angeordnete Tragkörper (17a, 17b) umfaßt, die an ihren Außenseiten mit Stirnplatten (25a, 25b) versehen sind, wobei das Innenteil (23) an der Außenhülse (11) festlegbar ist.

10. Drehmomentstütze, insbesondere für eine Torque-Roll-Motorlagerung bei Kraftfahrzeugen, mit einem Radiallager gemäß einem der vorstehenden Ansprüche.

## Claims

1. Radial bearing, particularly for a torque support in motor vehicles, with an outer sleeve and an inner sleeve which is coaxial with the said outer sleeve and is constructed as a bush core, there being disposed, in a clear space which is present between the inner sleeve and the outer sleeve, at least one radially orientated elastomeric body with axially oriented hollow ducts and at least one rubber end stop which operates after a spring deflection, which can be predetermined, of the elastomeric body, characterized in that the inner sleeve (12) is received, at its outer periphery, on the outer sleeve (11) by means of at least two mutually opposite elastic carrying bodies (17a, 17b), in such a way that, as the force increases, the elastic carrying bodies, the elastomeric body of which there is at least one, and the rubber end stop of which there is at least one, which have different rigidity in each case, operate one after the other.

2. Radial bearing according to claim 1, characterized in that two elastomeric bodies (21, 22) are provided, which have an interval between them, the rubber end stop (20) being disposed between the said elastomeric bodies (21, 22).

3. Radial bearing according to claim 1 or 2, characterized in that the elastomeric body (21, 22), of which there is at least one, has oppositely located regions (21a, 21b) between which the inner sleeve (12) is received.

4. Radial bearing according to one of claims 1 to 3, characterized in that the elastomeric body (21, 22), of which there is at least one, and/or the regions (21a, 21b) thereof, is disposed so as to be offset in the peripheral direction in relation to the carrying bodies (17a, 17b), and thus forms an angle, in particular a 90° angle, with the said carrying bodies (17a, 17b).

5. Radial bearing according to one of claims 1 to 4, characterized in that the elastomeric body (21, 22), of which there is at least one, is secured in position on the inner sleeve (12), the outer periphery of the elastomeric body (21, 22), of which there is at least one, delimiting a gap (S₁) in conjunction with the outer sleeve (11).

6. Radial bearing according to one of claims 1 to 5, characterized in that the rubber end stop (20) is provided on a metal bead (19) which projects radially from the inner sleeve (12).

7. Radial bearing according to one of claims 1 to 6, characterized in that the rubber end stop (20) delimits, in conjunction with the outer sleeve, a gap (S₂) which is greater than the gap (S₁) between the elastomeric body (21, 22) and the outer sleeve (11).

8. Radial bearing according to one of claims 1 to 7, characterized in that the hollow ducts (24) of the elastomeric body (21, 22), of which there is at least one, have a cross-section which is variable in the axial direction.

9. Radial bearing according to one of claims 1 to 8, characterized in that an inner part (23) is provided which encompasses the inner sleeve (12), elastomeric bodies (21, 22) disposed thereon which have an interval between them and an intervening rubber end stop (20), and carrying bodies (17a, 17b) which are mounted on the outer side of the inner sleeve (12), are disposed so as to be offset in the peripheral direction in relation to the elastomeric bodies (21, 22) and are provided with end plates (25a, 25b) on their outer sides, the said inner part (23) being capable of being secured in position on the outer sleeve (11).

10. Torque support, particularly for a torque roll engine mounting in motor vehicles, with a radial bearing according to one of the above claims.

## Revendications

1. Palier radial, en particulier pour un support soumis à un couple dans des moteurs de véhicules automobiles, comportant un manchon extérieur et un manchon intérieur, coaxial par rapport au manchon extérieur et réalisé sous la forme d'un noyau à douille, dans lequel au moins un corps élastomère dirigé en sens radial avec des canaux dirigés en sens axial et au moins une butée terminale en caoutchouc sont agencés dans un espace libre existant entre le manchon intérieur et le manchon extérieur, ladite butée terminale agissant après un écrasement prédéterminé du corps élastomère, caractérisé en ce que le manchon intérieur (12) est reçu sur sa périphérie extérieure au moyen de deux corps porteurs élastiques opposés (17a, 17b) sur le manchon extérieur (11), de telle manière que les corps porteurs élastiques agissent les uns après les autres lorsque la force augmente, lesdits corps porteurs comportant au moins un corps élastomère et au moins une butée en caoutchouc, qui présentent respectivement des raideurs différentes.

2. Palier radial selon la revendication 1, caractérisé en ce qu'il est prévu deux corps élastomères (21, 22) écartés, et en ce que la butée terminale en caoutchouc (20) est agencée entre les corps élastomères (21, 22).

3. Palier radial selon l'une ou l'autre des revendications 1 et 2, caractérisé en ce que ledit au moins un corps élastomère (21, 22) présente des régions opposées (21a, 21b), entre lesquelles est reçu le manchon intérieur (12).

4. Palier radial selon l'une des revendications 1 à 3, caractérisé en ce que ledit au moins un corps élastomère (21, 22), et/ou ses régions (21a,21b), sont agencés en décalage en direction périphérique par rapport aux corps porteurs (17a, 17b), et enferment par conséquent avec les corps porteurs (17a, 17b) un angle en particulier égal à 90°.

5. Palier radial selon l'une des revendications 1 à 4, caractérisé en ce que ledit au moins un corps élastomère (21, 22) est fixé sur le manchon intérieur (12), et la périphérie extérieure du corps élastomère (21, 22) délimite avec le manchon extérieur (11) un intervalle (S₁).

6. Palier radial selon l'une des revendications 1 à 5, caractérisé en ce que la butée terminale en caoutchouc (20) est prévue sur un bourrelet de métal (19) qui dépasse radialement depuis le manchon intérieur (12).

7. Palier radial selon l'une des revendications 1 à 6, caractérisé en ce que la butée terminale en caoutchouc (20) délimite avec le manchon extérieur un intervalle (S₂), plus grand que l'intervalle (S₁) entre le corps élastomère (21, 22) et le manchon extérieur (11).

8. Palier radial selon l'une des revendications 1 à 7, caractérisé en ce que les canaux creux (24) dudit au moins un corps élastomère (21, 22) présentent une section variable en direction axiale.

9. Palier radial selon l'une des revendications 1 à 8, caractérisé en ce qu'il est prévu une pièce intérieure (23), qui entoure le manchon intérieur (12), des corps élastomères (21, 22) écartés et agencés sur ce manchon, comprenant une butée terminale en caoutchouc interposée (20), et des corps porteurs (17a, 17b) montés sur la face extérieure du manchon intérieur (12) et agencés en décalage en direction périphérique par rapport aux corps élastomères (21,22), qui sont pourvus de plaques frontales (25a, 25b) sur leur côté extérieur, ladite pièce intérieure (23) étant susceptible d'être fixée sur le manchon extérieur (11).

10. Support soumis à un couple de rotation, en particulier pour le montage d'un moteur à couple du type "Torque-Roll" dans des véhicules automobiles, comprenant un palier radial selon l'une des revendications précédentes.
